Europäisches Patentamt

(19) European Patent Office

Office européen des brevets

(11) **EP 0 946 066 A1**

(12) **EUROPEAN PATENT APPLICATION**

(43) Date of publication:
29.09.1999 Bulletin 1999/39

(51) Int. Cl.⁶: **H04N 13/04**

(21) Application number: 98400675.9

(22) Date of filing: 23.03.1998

(84) Designated Contracting States:
AT BE CH DE DK ES FI FR GB GR IE IT LI LU MC NL PT SE
Designated Extension States:
AL LT LV MK RO SI

(71) Applicant: THOMSON multimedia
92100 Boulogne Billancourt (FR)

(72) Inventor: Blondé, Laurent
92100 Boulogne Billancourt (FR)

(74) Representative:
Zhang, Jianguo et al
THOMSON multimedia,
46 Quai A. Le Gallo
92100 Boulogne Billancourt (FR)

(54) **Autostereoscopic display**

(57) The apparatus and method for projecting stereoscopic 3D images for a direct view on a rear-projector Fresnel lens is composed of: a directive light source (11), an eyes detector and pupils mask generator (20), a LCD polarised light beams generator (30), a dual LCD image generation device (50), and an image formatting device (60).

The light source (11) generates light beams to the LCD polarised light beams generator (30) which is controlled by the eyes detection device (20). This latter is connected to a camera (21) and is directed towards the audience so as to identify and to locate the viewers' eyes. Two types of light beams are formed by the LCD polarised light beams generator (30). Each light beam is polarised and carries specific characteristics that determine the difference between both types of light beams.

The polarised light beams are then received on a dual LCD (50) which in turn displays simultaneously a pair of full resolution images on its stakes and aligned LCD plates. This dual LCD is controlled by an image formatting device (60) that drives successively the light allocation and the light attenuation of the light beams. This image formatting device has input signals that correspond to the two channels to be visualised.

Thus, the combination of the eyes detection device (20) and the LCD polarised light beams generator (30) forms polarised light beams from the light received from the light source (11). Conversely, the combination of the Dual LCD (50) and the image formatting device (60) forms stereoscopic images by displaying distinct images on the two polarized light beams.

Figure 1

## Description

The present invention relates to a 3D stereoscopic display, and more particularly to an apparatus and a method for displaying stereoscopic 3D images for a direct view on a projection screen.

TV based 3D visualisation systems display simultaneously or in sequence two streams of pictures representing respectively the left and right view of a scene.

In the prior art, 3D display experimental systems use different types of technology. The parallax barriers system is based on a double number of columns that contain vertically interlaced image wherein even columns are hidden by the barrier for one eye, odd columns for the other eye. The polarisation system polarises the left and right images with orthogonal light polarisation so that the viewer is required to wear polarised glasses to select the signal dedicated to each eye. And the lenticular screens system, the input image of which is similar to parallax barriers system, contains column shaped lenses attached to the TV screen for separating right and left images from each other and thus right and left eyes of the viewer can selectively receive right and left screen images respectively.

In a US patent 5,162,897, a projection type stereoscopic image display system in which a left-eye projection light beam and a right-eye projection light beam are projected from behind a transparent screen thereby to display a stereoscopic image. But this kind of implementation requires to use polarised glasses.

In an article 《 Time Multiplex Three Dimensional Video Display 》, Cambridge University, from SID 95 Digest, pages 851 to 854, by ARL Travis and al, a 3D image is synthesised from many 2D views of the original. The technique that is used is based on a LCD stop device with time sequential lateral scanning. However, in this article, the disclosed time-multiplexed displays has the main drawback which rests on the fact that several scene views are temporally projected in a number of side by side spatial directions, which is not the case in the present invention.

In another article 《 Stereoscopic Display System using backlight distribution 》, Terumo Corp, Kanagawa, JP, from SID 95 Digest, pages 855 to 858 by S. Omory and al, a stereoscopic display system with color LCDs for right and left eyes is disclosed. This implementation does not use glasses. However, in this technique, it is required to implement two displaying devices, one for the right image and the other for the left image with special back-light system. The images for right and left eyes are displayed on respective LCD panels. Afterwards, the separated right and left images on color LCDs to respective eyes are combined on one screen by the use of a half-transparent mirror. Therefore, such technique requires the implementation of cumbersome materials such as two separated CRTs and LCDs or at least two separated LCDs in a simplified version.

An international application WO 95/21398 by Terumo, discloses an image display apparatus that gives more details in the implementation of the previous article. Indeed, in this patent application, light of the screen images for the right eye and for the left eye are perpendicularly polarised to each other. In this kind of implementation, the screen images for the right eye and screen images for the left eye of images are combined by a half-transparent mirror in order to be respectively seen by the right and the left eyes of the viewers.

There are many other principles but they do not use standard TV pictures as input such as the holography, one may refer to the 《 Three dimensional Imaging Techniques 》 by Takanori Okoshi, Academic Press.

For a number of reasons, all these kinds of displays do not satisfy the quality and ergonomic criteria necessary to be implemented in a product to be marketed. Each of the system has at least one of the main drawbacks that can be quoted as follows:

- the restricted number of visualisation positions that occurs in the parallax barriers and the lenticular screens systems;
- the need to wear special glasses when the polarisation system is implemented;
- the flickers that are generated by the use of time-multiplexed display such as the one disclosed in Travis's document; and

the complexity and size of the 3D image set-up that is required for using the techniques disclosed in Travis and Omori's documents.

The present invention aims, therefore, to overcome the above restrictions and to propose an apparatus and a method for displaying a 3D image for a direct view on a projection screen that can be easily implemented in order to be marketed broadly.

It is an object of the present invention to implement an apparatus and a method that would preferably be compatible with TV standards in terms of spatial and temporal resolution without using any multiplex nor subsampling for each of the two streams.

It is another object of the invention to avoid using polarised glasses and to have an apparatus that display images which can be viewed directly.

It is a further object of the invention to allow a free head position when watching the 3D images.

According to the present invention, the apparatus for displaying a stereoscopic 3D image on a projection screen including a light source (11), at least two circuits (66,69) for transmitting respectively at least two video signals $(S_1, S_2)$ for producing corresponding images comprises:

- a first means (20,30) for forming polarised light beams from the light received from the light source (11);
- a second means (50,60) for forming stereoscopic images from the polarised light beams; wherein the second means contains:

- an image formatting means (60) receiving the video signals ($S_1,S_2$) for generating a first and second control signals ($S_{all}$, $S_{att}$); and
- a dual LCD (50) traversed successively by the polarised light beams and responsive to the first and second control signals ($S_{all}$, $S_{att}$) for displaying simultaneously two images signals.

Furthermore, according to the present invention, the apparatus for displaying a stereoscopic 3D image may be implemented with a method that comprises the steps of:

(a) forming polarised light beams from the light received from the light source (11);
(b) receiving the video signals ($S_1,S_2$) in an image formatting means (60);
(c) generating from the image formatting device (60) a first and second control signals ($S_{all}$, $S_{att}$);
(d) responsive to the first and second control signals ($S_{all}$, $S_{att}$), forming two distinct stereoscopic images on the polarised light beams using a dual LCD (50); and
(e) displaying simultaneously these two distinct stereoscopic images with said projection screen.

In a simplified version wherein the eyes tracking module is not implemented, the apparatus and method according to the present invention allow the visualisation of 3D scenes at fixed head positions. This second mode of operation restricts however the visualisation of the 3D scenes to a number of viewers' predefined positions.

In an alternate embodiment, the apparatus and method according to the invention allow a double projection mode: a stereoscopic 3D display with depth perception or a double programme which can also be called a Double TV Display for displaying two different program for two groups of viewers, for example a football match and a sitcom programme. But in the meantime, the system should also be able to display any single channel TV programme.

Figure 1 illustrates a general view of a display structure implemented according to the present invention.

Figure 2 illustrates an eye detection apparatus to be used in connection with the present invention.

Figure 3 illustrates a polarised light beam generator according to the present invention.

Figure 4 shows an example of the energy allocation obtained through a Dual LCD image generator according to the present invention.

Figure 5 illustrates an example of propagation along two directions with two types of polarisation through the Dual LCD image generator of the present invention.

Figure 6A illustrates a resulting electric fields for two propagation directions and two types of polarisation.

Figure 6B shows an arrays of figures of electric field level for the dashed and plain rays according to the values of $\alpha$ and T.

Figure 7 illustrates an image formatting device that drives the Dual LCD.

Figure 8 shows a simplified embodiment of the present invention wherein the eye detection device is not implemented.

Figure 9 shows another example of double TV mode according to the present invention.

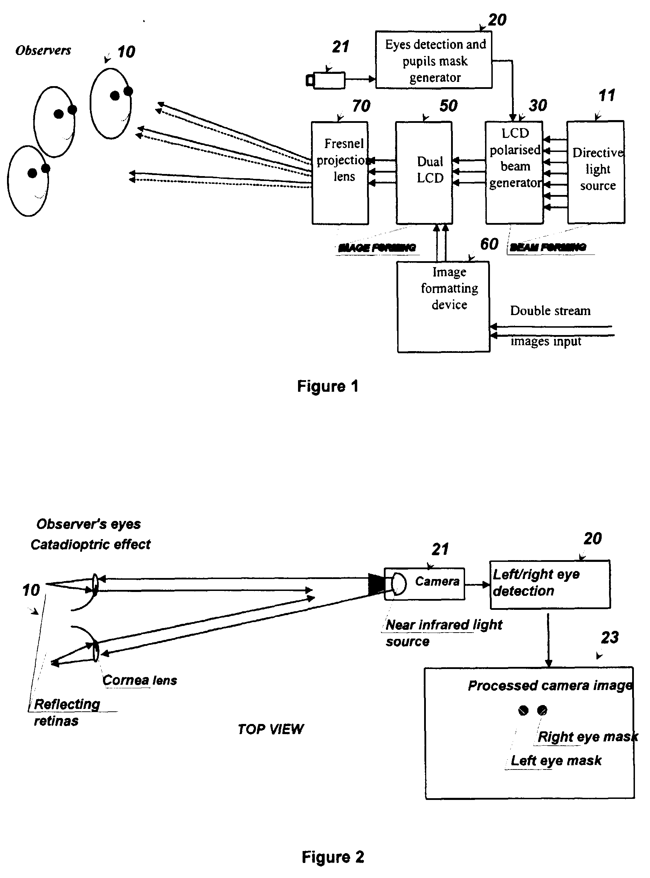

The apparatus according to the present invention is composed of the following elements, as is shown in figure 1:

A *Directive light source* (11);
An *Eyes detector and light stops generator* (20) in connection with a *camera* (21);
A *LCD polarised light beams generator* (30);
A *Dual LCD image generation device* (50);
An *Image formatting device* (60);
A *Fresnel projection lens* (70).

In this figure, the light source (11) generates light beams to a LCD polarised light beams generator (30) which is controlled by an eyes detection device (20). This latter is connected to a camera (21) and is directed towards the audience so as to identify and to locate the viewers' eyes.

Two types of light beams are formed by the LCD polarised light beams generator (30). Each light beam is polarised and carries specific characteristics that enable to determine the difference between both types of light beams.

The purpose of the eyes detector and the light stops generator (20) in combination with the LCD polarised light beams generator (30) is to form polarised light beams from the light received from the light source (11).

The polarised light beams are then received on a dual LCD (50) also called a dual LCD image generation device which in turn displays simultaneously a pair of full resolution images on its staked and aligned LCD plates. This dual LCD is controlled by an image formatting device (60) that drives successively the light allocation and the light attenuation of the light beams. This image formatting device has input signals that correspond to the two channels to be visualised. The details of the dual LCD and the image formatting device implementations will be given later on in paragraphs 4 and 5.

Thus, the purpose of the Dual LCD (50) and the image formatting device (60) is to form stereoscopic images creating a left and right image simultaneously, respectively on the two polarised light beams.

The image generated on the dual LCD is then projected on a Fresnel projection lens commonly used in LCD rear-projectors.

In a simplified implementation with fixed visualisation positions, the eyes detection device is suppressed and the LCD polarised light beam generator (30) is replaced by a simpler embodiment the detailed description of which is given in paragraph 7 below.

1. Directive light source

The directive light source (11) may be of the type used in classical rear-projectors, that's to say including a light bulb and an optical condenser. For some applications a Cathode Ray Tube may be used, possibly driven by the eyes detection module in order to create localised beams.

2. Eyes detection and light stops generation device

The purpose of the eyes detection system is to identify and to locate the position of the all the viewers eyes. For this purpose, the use of a simple video camera (21) is proposed. The camera works in the near infrared domain (0.8-1.1μm) and is used in conjunction with a near infrared light source. As is shown in figure 2, the light rear-reflected by the retina of observer's eyes (10) is analysed by exploiting the catadioptric (cat's eyes) phenomenon at this wavelength. Figure 2 shows an illustration of a processed image obtained by the camera (21) owing to the left/right eye detection device (20). The acquired image map (23) is processed to identify and to locate respectively the right and left portions of each eyes pair.

According to another implementation of the invention, wherein the present apparatus operates in a double TV mode, this eye detection and light stops generation device has the task of detecting each eyes pair corresponding to the different observers in the room in connection with a complementary module which assigns the corresponding program to each eyes pair.

3. LCD polarised light beams generator

The LCD polarised light beam generator (30) create polarised optical pupils that are placed in specific planes (sometime called Fourier planes) where they define the light beams shapes.

In the present invention, the action in the optical pupils domain has the objective to create light beams with identified characteristics (here polarisation) permitting the discrimination between two types of beams (for example the ones corresponding to a left eye information and the ones corresponding to the right eye).

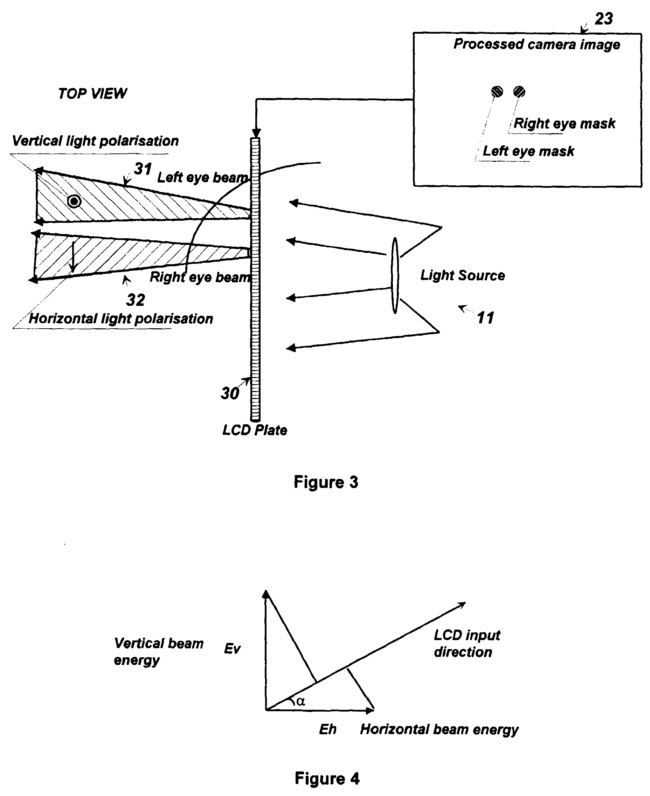

This is shown in figure 3 wherein the light generated by the light source (11) traverses the LCD polarised light beams generator (30) which is controlled by the eyes detection device (20) owing to the processed camera image (23). The LCD (30) generates a first light beam (31) with a particular light parameter for one eye and a second light beam (32) with an orthogonal light parameter for the other eye.

The light parameter used to perform this discrimination is the light polarisation. For example the left eye beams -identified thanks to the above eyes detection module- will be assigned a say vertical light polarisation while the right eye beams will be assigned say an horizontal light polarisation. Polarisation assignment is the task of a simple LCD array placed after the directional light source and driven by the eyes position map elaborated by the preceding module. For this operation the LCD array may be of coarse resolution.

In the case of the double TV operating mode, the light beams corresponding to different observers will be assigned a different light polarisation if they wish to visualise different programmes.

4. Dual LCD image generation device

It should be kept in mind that the objective of the apparatus and the method according to the present invention is to display simultaneously two image signals. Unlike classical systems that use separate LCD plates for separating light beams, the idea here is to work on a single LCD device composed of two stacked and aligned LCD plates. Both LCD plates are traversed successively by the light beams and each plate has a specific role in the image formation process. The first plate (51) has the function of light allocating and the second one (52) has the function of light attenuating.

The first LCD plate (51) in the light propagation direction has the objective to allocate energy between the two polarised light beams. It is a *light allocation LCD*.

The LCDs are generally known as being composed of molecules aggregated in helicoidal shape selecting a specific direction in the incoming light. In all LCDs one of the sides has a fixed direction (the "brushed" side) and the other side has a variable molecule direction adjustable through a pixel by pixel voltage variation.

In the present apparatus, the variable orientation side is oriented towards the incoming light. Figure 4 is a view representing a LCD input direction of angle a selecting energy on the vertical and horizontal polarisation beams. The transmitted energy for each beam corresponds to the projection of its incoming energy on the LCD input direction. They have the forms:

$$E_v^t = E_v \cos(\alpha) \text{ and } E_h^t = E_h \sin(\alpha)$$

where $E_v^t$ is the transmitted energy for the vertically polarised beam,
$E_h^t$ is the transmitted energy for the horizontally polarised beam, and
$E_v$ and $E_h$ being the corresponding incoming energies.

In consequence, if for a given pixel, an energy $E_1$ is desired on the horizontally polarised beam and an energy $E_2$ is desired on the other beam, the angle $\alpha$ will be determined by the formula:

$$\alpha = arctg(E_1/E_2).$$

On each beam the energy can vary from 0 to $E = E_v = E_h$.
The second LCD plate (52) is in charge of the signal attenuation on each of the two beams in order to reach the adequate energy level at the output of each image pixel. It is a *light attenuation LCD*. This second LCD is used classically, having as input the polarised light beam coming from the energy allocation LCD and having an analyser at the output. As the desired values are:

$$E_1 = T \cdot E \cdot \cos(\alpha) \text{ and } E_2 = T \cdot E \cdot \sin(\alpha),$$

the formula to compute the transmittance is of the form:

$$T = \frac{\sqrt{E_1^2 + E_2^2}}{E}.$$

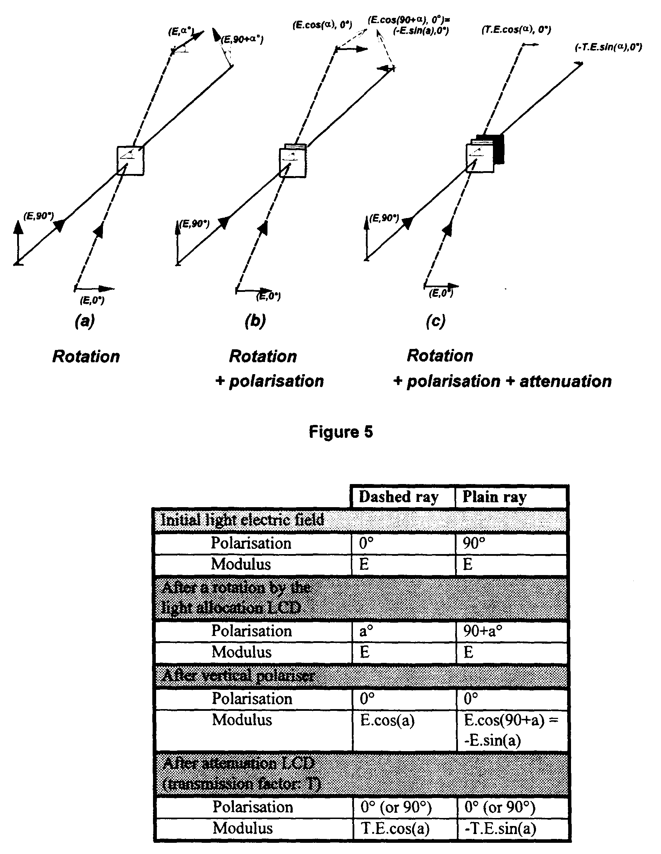

These mathematical transformations are performed by the image formatting device (60).
In another implementation, if both LCDs (51,52) are not close enough, a microlens plate (53) may be necessary to have a good light adaptation between them.
The implementation of the Dual LCD according to the present invention is shown in figure 5 which shows an example of propagation along two directions with two types of polarisation.
According to the present invention, the dual LCD image generation device (50) has the function of generating simultaneously a pair of full resolution images from polarised light beams. As is already mentioned, the dual LCD is composed of two stacked LCDs (51,52) of the same size and the same resolution providing for each pixel two parameters to adjust the light transmission.
This Dual LCD acts differently on two types of beams characterised by their polarisation, for example the vertical and horizontal polarisation. It should be kept in mind that both stacked LCD plates, also called light allocation LCD (51) and light attenuation LCD (52), operate in this order.

Figure 5 illustrates, *for one pixel* with a corresponding couple of (energy/angle), the three main steps of the light propagation in the Dual LCD stack (50) for two different propagation directions, for example towards the right and the left eye. Each of the two directions is 'marked' by a distinct initial polarisation (vertical or horizontal in the example). The three steps are:

- rotation of polarisation by the light allocation LCD (51),
- polarised filtering (horizontal in the present case),
- attenuation by the light attenuation LCD (52).

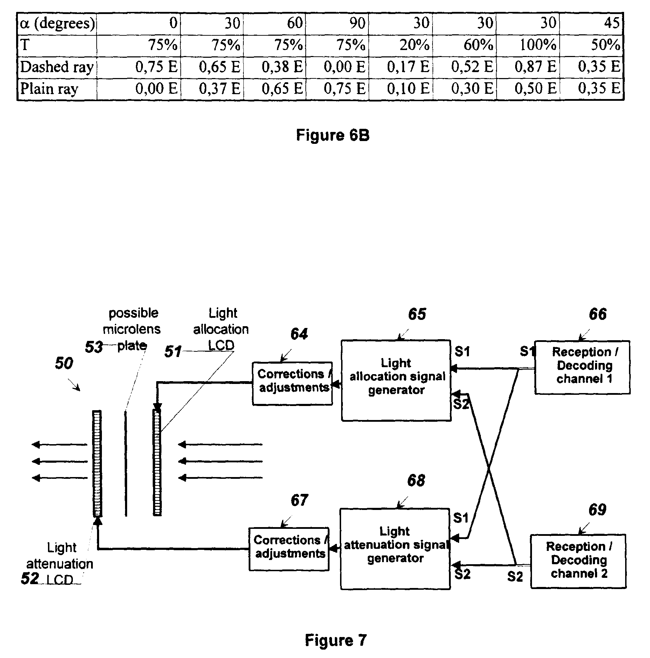

Indeed, in the first step (a), the left eye pixel with respectively an energy and an angle (E,90°) is allocated through the light allocation LCD (51) with an energy and an angle (E,90°+$\alpha$), whereas the right eye pixel with an energy and angle (E,0°) is allocated with an energy and angle (E,$\alpha$).
In the second step (b), the horizontal polarised filtering operation allocates the energy that corresponds to the vertical polarisation meaning that the left eye pixel is allocated the energy equal to E*cos(90+$\alpha$) = -E*sin($\alpha$), whereas the right eye pixel is allocated the energy equal to E*cos($\alpha$).
In the third step (c), the light attenuation LCD (52) attenuates the light for both left and right eyes by a transmission factor T mentioned above. Thus, the left eye and right eye pixels are respectively assigned to couples (T*E*cos($\alpha$), 0°) and (-T*E*sin($\alpha$),0°) which are the final results obtained through the dual LCD (50) with initial couples (E,90°) and (E,0°).
Figure 6A shows an array of the resulting electric fields for two propagation directions and two types of polarisation, in this specific case a vertical polariser is used. The dashed and the plain rays represent respectively the right and left eyes.
In connection with figure 6A, figure 6B shows that for each pixel, on each of the two directions, the value of any light electric field between 0 and E*max* may be reached according to the values of the two parameters $\alpha$ and T. Figure 6B shows an arrays of figures of the electric field level for the dashed and plain rays according to the values of $\alpha$ and T.

5. Image formatting device

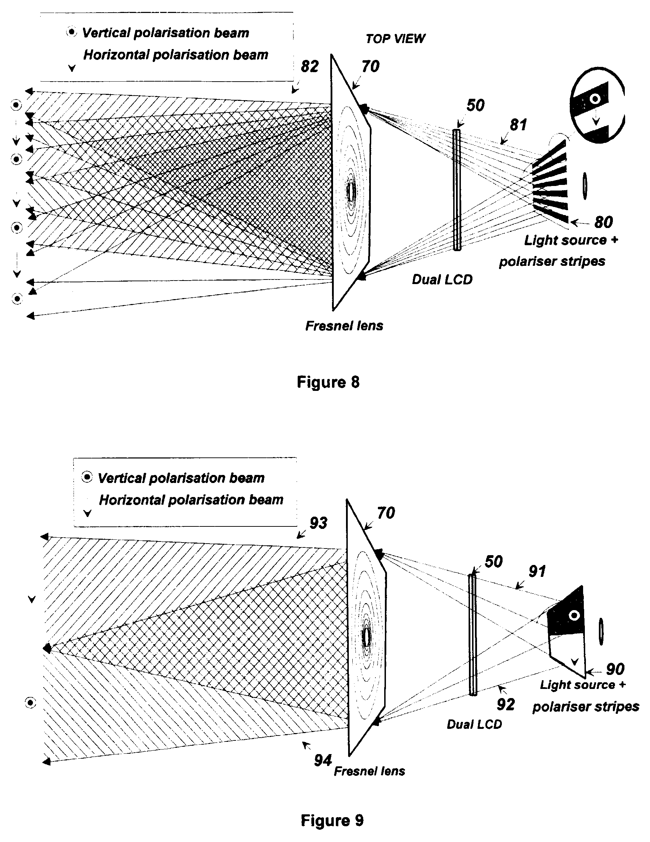

The image formatting device (60) has the objective to generate the adequate signals to drive the light allocation LCD (52) and the light attenuation LCD (51), refer to figure 7. The input signals correspond to the two channels to be visualised: either the left and right view of a stereo pair sequence or a pair of video programmes in the case of the double TV mode.

If $S_1$ and $S_2$ are the video signals generated from two tuners or decoders (or as well from a specific stereo decoder) of a first and second channels (66,69), the signal $S_{all}$ necessary to drive the light allocation LCD (51) is of the form:

$$S_{all} = arctg(S_1/S_2).$$

Conversely, for the light attenuation, the signal $S_{att}$ necessary to drive the light attenuation LCD (52) is of the form:

$$S_{att} = h \cdot \sqrt{S_1^2 + S_2^2},$$

where $h$ is a numerical constant.

It should be noted that this transformation can be performed by using general purpose or dedicated circuit and that the number of signals $S_1$ and $S_2$ is not limited. There can be more than two video signals that are generated from the tuners or decoders. But the implementation of two video signals represents the preferred embodiment.

Figure 7 illustrates the preferred embodiment of the implementation of an image formatting device (60) wherein two video signals $S_1$ and $S_2$ are respectively generated from a first reception/decoding channel 1 (66) and a second reception/decoding channel 2 (69). Both signals $S_1$ and $S_2$ are the required input signals of a light allocation signal generator (65) and light attenuation signal generator (68). The signals generated by both generators (65,68) are then respectively input in correction and adjustment modules (64,67) for correcting any non-linearity of the Dual LCD (50).

The corrected or adjusted signal issued from the light allocation signal generator (65) is then used for driving the light allocation LCD (51) so as to allocate the corresponding light energy to the right and left beams.

Afterwards, the energy of the right and left light beams are attenuated to reach the adequate level through the light attenuation LCD (52) after passing through a possible microlens plate (53).

6. Fresnel projection lens

The image projection part can be a Fresnel projection lens (70) as commonly used in LCD rear-projectors. To preserve the beams shape, this lens should not include the often used diffusing screen.

It should be kept in mind that the Fresnel projection lens might be replaced by any other projection screen that are commonly used in the 3D image projection.

7. Simplified embodiment of the invention

In a simplified embodiment according to the present invention, the eyes detection and light stops generation device (20) are suppressed and the LCD polarised light beam generator is replaced by a polariser based element described hereafter. This configuration does not allow free head movements since the stereoscopic 3D effect exists only for a number of predefined positions as well as the possibility of visually separating two screened programmes.

As seen in the paragraph 4, the characteristic for distinguishing the two types of beams in the system is the light polarisation. A simple solution, as shown in figure 8 which is a top view, consists in placing in the optical pupils plane a polarising plate composed of vertically aligned stripes (80) of respectively vertical and horizontal polarisation. Such polarizer stripes (80) determine as many different zones (81) as there are aligned stripes. The distance and arrangement of stripes may be defined in order to have the correct number of visualisation positions in the observation space as shown in area (82) of the light beams downstream the Fresnel lens (70). In the arrangement shown in figure 8, vertical and horizontal polarisation beams are alternatively generated in space so as to direct the polarised beams to the corresponding left and right eyes of the viewers.

Figure 9 which is a top view, illustrates another example where a polarising plate is composed of two vertically aligned stripes (90) of respectively vertical and horizontal polarisation. Such polarizer stripes (90) determine two different zones (91) and (92). In this implementation, a part of the viewers may be watching a first programme while the other part are watching another program. For this purpose, the first part of viewers are to be located in the area (93) corresponding to the horizontal light polarisation beam while the other viewers are to located in the area (94) corresponding to the vertical light polarisation beam.

However, in this operating mode, the earphones must be designed should be adapted to this situation by separating the audio channels.

Claims

1. An apparatus for displaying a stereoscopic 3D image on a projection screen including a light source (11), at least two circuits (66,69) for transmitting respectively at least two video signals $(S_1,S_2)$ for producing corresponding images; said apparatus characterised in that it comprises:

   • a first means (20,30) for forming polarised light beams from the light received from said light source (11);
   • a second means (50,60) for forming stereoscopic images from said polarised light beams; said second means comprising:

   - an image formatting means (60) receiving said at least two video signals $(S_1,S_2)$ for generating a first and second control sig-

nals ($S_{all}$, $S_{att}$); and

- a dual LCD (50) traversed successively by said polarised light beams and responsive to said first and second control signals ($S_{all}$, $S_{att}$) for displaying simultaneously two images signals.

2. The apparatus of claims 1 wherein said dual LCD (50) is composed of a first and a second stacked and aligned LCD plates (51,52); said first LCD plate (51) for allocating energy between said polarised light beams and said second LCD (52) for attenuating each of said beams so as to reach a required energy level at the output of each image pixel.

3. The apparatus of claims 2 wherein a microlens plate (53) is inserted between the light allocation LCD (51) and the light attenuation LCD (52) to have a good light adaptation.

4. The apparatus of any one of claims 1 to 3 wherein said first means (20,30) comprises:

- an eyes detecting means (20) for identifying and locating viewers' eyes; and
- means (30), responsive to said eyes detecting means (20), for generating polarised light beams.

5. The apparatus of claim 4 wherein said image formatting device (60) comprises:

- means (65), responsive to said at least two video signals ($S_1$,$S_2$) for generating said first control signal $S_{att}$ and for driving light allocation of said first LCD plate (51) of said dual LCD (50); and
- means (67), responsive to said at least two video signals ($S_1$,$S_2$) for generating said second control signal $S_{att}$ and for driving light attenuation of said second LCD plate (52) of said dual LCD (50).

6. The apparatus of claim 1 wherein said first means (30) comprises a polarising plate composed of vertically aligned stripes (80) of respectively vertical and horizontal polarisation so as to correspond with predefined positions of viewers' eyes.

7. The apparatus of claims 6 wherein said polarising plate is composed of two vertically aligned stripes (90) that determine two different areas for viewing two different programmes.

8. The apparatus of any one of the previous claims wherein said light source (11) is a cathode ray tube.

9. A method for displaying a stereoscopic 3D images on a projection screen including a light source (11), at least two circuits (66,69) for transmitting respectively at least two video signals ($S_1$,$S_2$) for producing corresponding images; said method characterised in that it comprises the steps of:

(a) forming polarised light beams from the light received from said light source (11);
(b) receiving said at least two video signals ($S_1$,$S_2$) in an image formatting means (60);
(c) generating from said image formatting means (60) a first and second control signals ($S_{all}$, $S_{att}$);
(d) responsive to said first and second control signals ($S_{all}$, $S_{att}$), forming two distinct stereoscopic images on said polarised light beams using a dual LCD (50); and
(e) displaying simultaneously said two distinct stereoscopic images signals with said projection screen.

10. The method of claim 9 wherein the step (b) of receiving said at least two video signals ($S_1$,$S_2$) further comprises the steps of:

- receiving in a light allocation signal generating means (65) said at least two video signals ($S_1$,$S_2$) so as to generate by a first LCD plate (51) of said dual LCD (50) said first control signal $S_{all}$ for driving light allocation of said polarised light beams; and
- receiving in a light attenuation signal generating means (67) said at least two video signals ($S_1$,$S_2$) so as to generate by a second LCD plate (52) of said dual LCD (50) said second control signal $S_{att}$ for driving light attenuation of said polarised light beams.

**20**

**21**

Eyes detection and
pupils mask
generator

**70**     **50**     **30**     **11**

Fresnel
projection
lens

Dual
LCD

LCD
polarised
beam
generator

Directive
light
source

**IMAGE FORMING**

**BEAM FORMING**

**60**

Image
formatting
device

Double stream

images input

Observers

**10**

**Figure 1**

*Observer's eyes
Catadioptric effect*

**21**

**20**

**10**

*Camera*

*Left/right eye
detection*

*Near infrared light
source*

**23**

*Cornea lens*

*Processed camera image*

*Reflecting
retinas*

**TOP VIEW**

*Right eye mask*

*Left eye mask*

**Figure 2**

**TOP VIEW**

**23**

Processed camera image

Right eye mask

Left eye mask

Vertical light polarisation

**31** Left eye beam

Right eye beam

**32**

Horizontal light polarisation

Light Source

**11**

**30**

LCD Plate

Figure 3

Vertical beam energy  $E_v$

LCD input direction

$\alpha$

$E_h$  Horizontal beam energy

Figure 4

Figure 5

|  | Dashed ray | Plain ray |
|---|---|---|
| **Initial light electric field** | | |
| Polarisation | 0° | 90° |
| Modulus | E | E |
| **After a rotation by the light allocation LCD** | | |
| Polarisation | a° | 90+a° |
| Modulus | E | E |
| **After vertical polariser** | | |
| Polarisation | 0° | 0° |
| Modulus | E.cos(a) | E.cos(90+a) = -E.sin(a) |
| **After attenuation LCD (transmission factor: T)** | | |
| Polarisation | 0° (or 90°) | 0° (or 90°) |
| Modulus | T.E.cos(a) | -T.E.sin(a) |

| α (degrees) | 0 | 30 | 60 | 90 | 30 | 30 | 30 | 45 |
|---|---|---|---|---|---|---|---|---|
| T | 75% | 75% | 75% | 75% | 20% | 60% | 100% | 50% |
| Dashed ray | 0,75 E | 0,65 E | 0,38 E | 0,00 E | 0,17 E | 0,52 E | 0,87 E | 0,35 E |
| Plain ray | 0,00 E | 0,37 E | 0,65 E | 0,75 E | 0,10 E | 0,30 E | 0,50 E | 0,35 E |

**Figure 6B**

**Figure 7**

**Figure 8**

**Figure 9**

**European Patent Office**

**EUROPEAN SEARCH REPORT**

Application Number

EP 98 40 0675

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 744 872 A (CANON KK) 27 November 1996 <br> * figures 3-6,10,33,35 * | 1-6,8-10 | H04N13/04 |

TECHNICAL FIELDS SEARCHED (Int.Cl.6)

H04N
G02B

The present search report has been drawn up for all claims

| Place of search | Date of completion of the search | Examiner |
|---|---|---|
| THE HAGUE | 17 July 1998 | De Paepe, W |